# EUROPÄISCHE PATENTANMELDUNG

(11) **EP 3 530 988 A1**
(43) Veröffentlichungstag der Anmeldung: **28.08.2019**
(21) Anmeldenummer: 18157884.0
(22) Anmeldetag: 21.02.2018
(51) Int. Cl.: F16H 57/04

(54) **ÖLFÖRDER- UND SPEICHERVORRICHTUNG SOWIE GETRIEBE MIT EINER SOLCHEN**

(71) Anmelder: Flender GmbH, 46395 Bocholt (DE)
(72) Erfinder: Becka, Simon, 45128 Essen (DE)
(74) Vertreter: Maier, Daniel Oliver

(57) **Zusammenfassung**

Die Erfindung betrifft eine Ölförder- und Speichervorrichtung (4) zum Absenken eines Ölstands eines Ölsumpfes (3) eines Getriebes (1) während des Betriebs des Getriebes (1), umfassend eine Ansaugkammer (5), an die eine Ölleitung (6) angeschlossen und deren Volumen über die Vor- und Zurückbewegung eines ersten Kolbens (8) veränderbar ist, und einen mit einem zweiten Kolben (9) versehenen Arbeitszylinder (10), wobei der zweite Kolben (9) mit dem ersten Kolben (8) insbesondere über eine Kolbenstange (11) derart verbunden ist und über ein Thermo-Wachs (12) temperaturabhängig derart bewegt wird, dass das Volumen der Ansaugkammer (5) bei zunehmender Temperatur vergrößert wird. Ferner betrifft die Erfindung ein Getriebe mit einer solchen Ölförder- und Speichervorrichtung (4).

## Beschreibung

Die vorliegende Erfindung betrifft eine Ölförder- und Speichervorrichtung zum Absenken eines Ölstands eines Ölsumpfes eines Getriebes während des Betriebs des Getriebes. Ferner betrifft die vorliegende Erfindung ein einen Ölsumpf aufweisendes Getriebe mit einer solchen Ölförder- und Speichervorrichtung.

Mit einer Öl-Schmierung ausgeführte Getriebe sind im Stand der Technik in unterschiedlichsten Ausgestaltungen bekannt. Sie umfassen normalerweise einen im unteren Bereich des Getriebegehäuses ausgebildeten Ölsumpf, in dem sich das Öl im ruhenden Zustand des Getriebes sammelt. Der Ölstand des Ölsumpfes ist meist derart gewählt, dass selbst die kleinsten Zahnräder des Getriebes beim Stillstand in den Ölsumpf eintauchen, um Notlaufeigenschaften zu gewährleisten. Hierdurch entstehen während des Betriebs aufgrund der Bewegung der Zahnräder im Öl Quetsch- und Planschverluste. Diese sind je nach Drehrichtung unterschiedlich und beeinflussen die Energiebilanz sowie das thermische Verhalten negativ, was grundsätzlich nicht wünschenswert ist.

Zur Reduzierung der Quetsch- und Planschverluste schlägt die DE 10 2009 014 318 A1 vor, den Ölstand des Ölsumpfes während des Betriebs des Getriebes abzusenken. Hierzu ist innerhalb des Getriebegehäuses ein Zwischenspeicher vorgesehen, der bei Inbetriebnahme des Getriebes mit Öltropfen gefüllt wird, die von den Zahnrädern aus dem Ölsumpf aufgeschleudert werden, wodurch der Füllstand des Ölsumpfes abgesenkt wird. Der Zwischenspeicher ist mit Ablauföffnungen versehen, die derart bemessen sind, dass die während des Betriebs des Getriebes in den Zwischenspeicher geförderte Ölmenge stets größer als die durch die Ablauföffnungen ablaufende Ölmenge ist. Auf diese Weise wird sichergestellt, dass der Zwischenspeicher während des Betriebs des Getriebes nicht leerlaufen kann. Alternativ oder zusätzlich kann die von dem Zwischenspeicher aufnehmbare maximale Ölmenge durch einen Überlauf begrenzt sein, um zu gewährleisten, dass stets ausreichend Öl im Ölsumpf verbleibt.

Ein Nachteil eines Zwischenspeichers der in der DE 10 2009 014 318 A1 beschriebenen Art besteht darin, dass seine Geometrie sehr genau an das jeweilige Getriebe angepasst werden muss, was im Einzelfall sehr aufwendig sein kann und mit entsprechend hohen Kosten einhergeht. Ein weiterer Nachteil besteht darin, dass der Zwischenspeicher bereits mit Inbetriebnahme des Getriebes und damit im kalten Getriebezustand mit Öl aus dem Ölsumpf gefüllt wird, was nicht wünschenswert ist.

Ausgehend von diesem Stand der Technik ist es somit eine Aufgabe der vorliegenden Erfindung, ein Getriebe mit verbessertem Aufbau zu schaffen.

Zur Lösung dieser Aufgabe schafft die vorliegende Erfindung eine Ölförder- und Speichervorrichtung zum Absenken eines Ölstands eines Ölsumpfes eines Getriebes während des Betriebs des Getriebes, umfassend eine Ansaugkammer, an die eine Ölleitung angeschlossen und deren Volumen über die Vor- und Zurückbewegung eines ersten Kolbens veränderbar ist, und einen mit einem zweiten Kolben versehenen Arbeitszylinder, wobei der zweite Kolben mit dem ersten Kolben insbesondere über eine Kolbenstange derart verbunden ist und über ein Thermo-Wachs derart temperarturabhängig bewegt wird, dass das Volumen der Ansaugkammer bei zunehmender Temperatur vergrößert wird. Wird eine solche Ölförder- und Speichervorrichtung an einem mit einem Ölsumpf ausgestatteten Getriebe in einer Weise angeordnet, dass die Ölleitung der Ölansaug- und Speichervorrichtung in den Ölsumpf eintaucht und das Thermo-Wachs durch die während des Betriebs des Getriebes anfallende Verlustleistung erwärmt wird, so wird bei Inbetriebnahme des Getriebes mit zunehmender Temperatur automatisch Öl aus dem Ölsumpf in die Ansaugkammer gefördert, wodurch Quetsch- und Planschverluste des Getriebes minimiert werden. Gleichzeitig wird aber auch sichergestellt, dass das Niveau des Ölsumpfes erst dann abgesenkt wird, wenn sich das Getriebe im aufgewärmten Zustand befindet. Ein Absenken des Ölstands des Ölsumpfes bei kaltem Getriebeöl ist ausgeschlossen. Umgekehrt wird das in die Ansaugkammer geförderte Öl automatisch wieder in den Ölsumpf abgelassen, sobald das Getriebe abkühlt, indem sich das Thermo-Wachs entsprechend zusammenzieht, woraufhin das Öl aus der Ansaugkammer gedrückt wird. Ein wesentlicher Vorteil des Aufbaus der erfindungsgemäßen Ölförder- und Speichervorrichtung besteht darin, dass diese autark ohne zusätzliche Energiequelle funktionstüchtig ist. Darüber hinaus sind die Ausrichtungen der Ansaugkammer und des Arbeitszylinders variabel. Mit anderen Worten können diese sowohl horizontal als auch vertikal montiert werden, was eine hohe Flexibilität bei der Installation der erfindungsgemäßen Ölförder- und Speichervorrichtung gestattet. Dies ist insbesondere dann von Vorteil, wenn eine erfindungsgemäße Ölförder- und Speichervorrichtung bei einem bereits bestehenden Getriebe nachgerüstet werden soll.

Bevorzugt ist der erste Kolben über ein Federelement in einer vorbestimmten Richtung vorgespannt, insbesondere in Einzugsrichtung des zweiten Kolbens, wenn beim Erkalten des Thermo-Wachses die Zugkraft des Arbeitszylinders nicht ausreichend ist, um das in der Ansaugkammer vorhandene Öl abzulassen.

Vorteilhaft ist in der Ölleitung ein Rückschlagventil angeordnet, wobei an die Ansaugkammer eine separate, mit einem Rückschlagventil versehene Ölablassleitung angeschlossen ist. Entsprechend kann das Öl beim Ablassen aus der Ansaugkammer über die Ölablassleitung entweichen, über die beispielsweise vorbestimmte Komponenten des Getriebes mit Öl versorgt werden.

Ferner schafft die vorliegende Erfindung ein Getriebe mit einem Getriebegehäuse, einem innerhalb des Getriebegehäuses ausgebildeten Ölsumpf und einer erfindungsgemäßen Ölansaug- und Speichervorrichtung, wobei die Ölleitung der Ölansaug- und Speichervorrichtung in den Ölsumpf eintaucht und der Arbeitszylinder an einer Position angeordnet ist, in der das Thermo-Wachs durch die während des Betriebs des Getriebes anfallende Verlustleistung erwärmt wird.

Die Ölansaug- und Speichervorrichtung ist bevorzugt oberhalb des Ölsumpfes angeordnet, um ein ordnungsgemäßes Befüllen der Ansaugkammer bei ansteigender Temperatur des Getriebes zu gewährleisten.

Vorteilhaft ist die Ölförder- und Speichervorrichtung innerhalb des Getriebegehäuses angeordnet. Auf diese Weise kann zum einen Bauraum eingespart werden. Zum anderen wird die Getriebetemperatur direkt auf das Thermo-Wachs übertragen, wodurch ein gutes Ansprechverhalten der Ölförder- und Speichervorrichtung sichergestellt ist.

Weitere Merkmale und Vorteile der vorliegenden Erfindung werden anhand der nachfolgenden Beschreibung von Getrieben gemäß Ausführungsformen der vorliegenden Erfindung unter Bezugnahme auf die beiliegende Zeichnung deutlich. Darin ist
Figur 1 eine schematische Ansicht eines Getriebes gemäß einer ersten Ausführungsform der vorliegenden Erfindung mit einer Ölförder- und Speichervorrichtung, die sich in einer ersten Stellung befindet;
Figur 2 eine schematische Ansicht des in Figur 1 dargestellten Getriebes, wobei sich die Ölförder- und Speichervorrichtung in einer zweiten Stellung befindet;
Figur 3 eine schematische Ansicht eines Getriebes gemäß einer zweiten Ausführungsform der vorliegenden Erfindung mit einer Ölförder- und Speichervorrichtung, die sich in einer ersten Stellung befindet;
Figur 4 eine schematische Ansicht des in Figur 3 dargestellten Getriebes, wobei sich die Ölförder- und Speichervorrichtung in einer zweiten Stellung befindet;
Figur 5 eine schematische Ansicht eines Getriebes gemäß einer dritten Ausführungsform der vorliegenden Erfindung;
Figur 6 eine schematische Ansicht eines Getriebes gemäß einer vierten Ausführungsform der vorliegenden Erfindung mit einer Ölförder- und Speichervorrichtung, die sich in einer ersten Stellung befindet; und
Figur 7 eine schematische Ansicht des in Figur 6 dargestellten Getriebes, deren Ölförder- und Speichervorrichtung sich in einer zweiten Stellung befindet.

Gleiche Bezugsziffern beziehen sich nachfolgend auf gleiche oder gleichartige Bauteile.

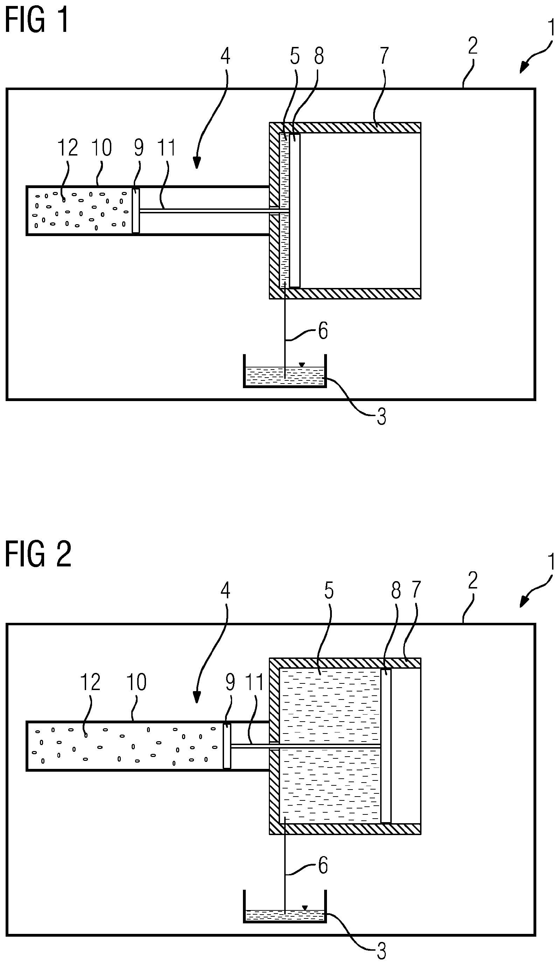

Die Figuren 1 und 2 zeigen ein Getriebe 1 gemäß einer ersten Ausführungsform der vorliegenden Erfindung. Das Getriebe 1 umfasst ein Getriebegehäuse 2, das im unteren Bereich einen Ölsumpf 3 definiert. Ferner weist das Getriebe 1 eine Ölansaug- und Speichervorrichtung 4 auf, die vorliegend im Inneren des Getriebegehäuses 2 angeordnet und dazu ausgelegt ist, den Ölstand des Ölsumpfes 3 während des Betriebs des Getriebes 1 abzusenken, wie es nachfolgend noch näher beschrieben ist. Die Ölansaug- und Speichervorrichtung 4 umfasst eine Ansaugkammer 5 mit variablem Volumen, an die eine Ölleitung 6 angeschlossen ist, welche die Ansaugkammer 5 fluidtechnisch mit dem Ölsumpf 3 verbindet. Die Ansaugkammer 5 wird vorliegend durch ein Zylindergehäuse 7 und einen innerhalb des Zylindergehäuses 7 vor und zurück bewegbaren Kolben 8 definiert, der gegenüber dem Zylindergehäuse 7 fluiddicht abgedichtet ist. Ferner umfasst die Ölansaug- und Speichervorrichtung 4 einen mit einem zweiten Kolben 9 versehenen Arbeitszylinder 10, der stirnseitig fest mit dem Zylindergehäuse 7 verbunden ist. Der zweite Kolben 9 ist mit dem ersten Kolben 8 über eine durch das Zylindergehäuse 7 geführte Kolbenstange 11 derart gekoppelt und über ein Thermo-Wachs 12 temperaturabhängig derart bewegbar, dass das Volumen der Ansaugkammer 5 bei zunehmender Temperatur durch Verschieben des ersten Kolbens 8 innerhalb des Zylindergehäuses 7 vergrößert wird. Figur 1 zeigt in diesem Zusammenhang eine erste Stellung der Kolben 8 und 9 der Ölansaug- und Speichervorrichtung 4 im kalten Zustand des Getriebes 1 bei Umgebungstemperatur. In diesem Zustand hat die Ansaugkammer 5 ein minimales Volumen, während der Ölstand des Ölsumpfes 3 maximal ist. Nach der Inbetriebnahme des Getriebes 1 erwärmt sich der Innenraum des Getriebegehäuses 2 aufgrund der Verlustleistung des Getriebes 1. Entsprechend steigt die Temperatur im Inneren des Getriebegehäuses 2 nach und nach an. Diesem Temperaturanstieg ist auch das Thermo-Wachs 12 ausgesetzt, das mit zunehmender Temperatur expandiert und entsprechend die Kolben 8 und 9 unter Vergrößerung des Volumens der Ansaugkammer 5 bewegt, bis die in Figur 2 dargestellte Stellung erreicht ist. Durch den dabei in der Ansaugkammer 5 entstehenden Unterdruck wird im Ölsumpf 3 befindliches Öl über die Ölleitung 6 kontinuierlich in die Ansaugkammer 5 gefördert, so dass der Ölstand des Ölsumpfes 3 entsprechend abnimmt. Auf diese Weise werden während des Betriebs des Getriebes 1 Quetsch- und Planschverluste minimiert.

Wird das Getriebe 1 wieder außer Betrieb genommen, so fällt die Temperatur im Innenraum des Getriebegehäuses 2 wieder auf Umgebungstemperatur ab. Entsprechend zieht sich das Thermo-Wachs 12 zusammen, so dass die Kolben 8 und 9 wieder unter Verkleinerung des Volumens der Ansaugkammer 5 zurück in die in Figur 1 dargestellte Stellung bewegt werden. Damit wird auch das in der Ansaugkammer 5 befindliche Öl über die Ölleitung 6 zurück in den Ölsumpf 3 entleert.

Ein wesentlicher Vorteil des zuvor beschriebenen Getriebes 1 besteht darin, dass der Füllstand des Ölsumpfes 3 temperaturabhängig verändert wird. Dabei wird der Füllstand im Ölsumpf 3 erst dann abgesenkt, wenn sich die Temperatur innerhalb des Getriebegehäuses 2 erhöht. Entsprechend ist es ausgeschlossen, dass eine Absenkung des Füllstandes bei kaltem Getriebe erfolgt. Weitere Vorteile, die mit dem Aufbau der zuvor beschriebenen Ölansaug- und Speichervorrichtung 4 einhergehen, bestehen darin, dass diese autark ohne zusätzliche Energiequelle betrieben wird und dass die Positionierung sowie die Ausrichtung der Ölansaug- und Speichervorrichtung 4 innerhalb des Getriebegehäuses 2 frei wählbar sind. Die Ölansaug- und Speichervorrichtung 4 sollte lediglich oberhalb des Ölsumpfes 3 angeordnet sein. Entsprechend ist die Installation der Ölansaug- und Speichervorrichtung 4 innerhalb des Getriebegehäuses 2 sehr einfach, preiswert und unproblematisch. Dies gilt auch für den Fall, dass bei einem bestehenden Getriebe 1 die Ölansaug- und Speichervorrichtung 4 nachgerüstet werden soll.

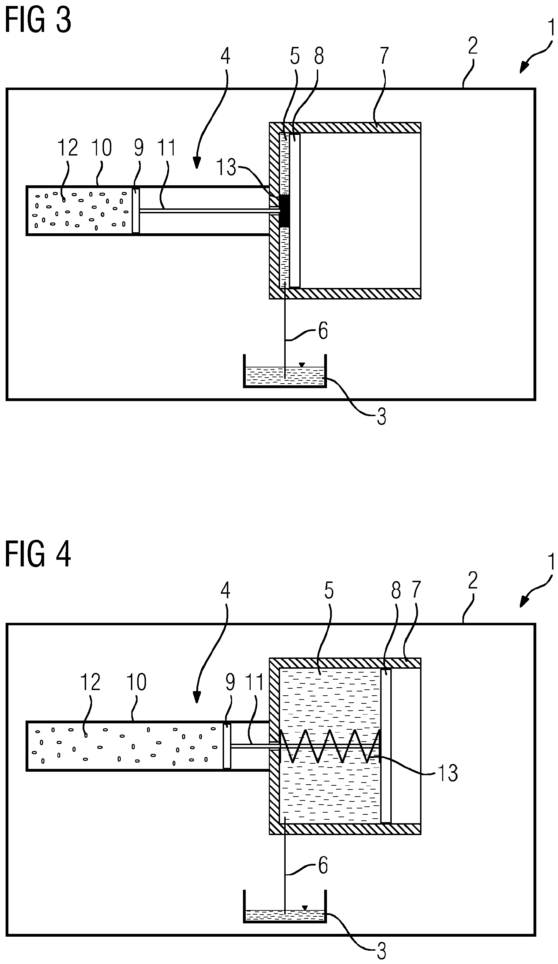

Die Figuren 3 und 4 zeigen ein Getriebe 1 gemäß einer zweiten Ausführungsform der vorliegenden Erfindung, wobei Figur 3 der in Figur 1 dargestellten Stellung und Figur 4 der in Figur 2 dargestellten Stellung der Kolben 8 und 9 entspricht. Der einzige Unterschied zwischen dem in den Figuren 3 und 4 dargestellten Getriebe 1 und dem in den Figuren 1 und 2 dargestellten Getriebe 1 besteht darin, dass der erste Kolben 8 bei der zweiten Ausführungsform über ein Federelement 13 in einer vorbestimmten Richtung vorgespannt ist, vorliegend in Richtung der in Figur 3 dargestellten Kolbenstellung, so dass die Kolben 8 und 9 durch das Federelement 13 bei erkaltendem Thermo-Wachs 12 ausgehend von der in Figur 4 dargestellten Stellung zurück in die in Figur 3 dargestellte Stellung bewegt werden.

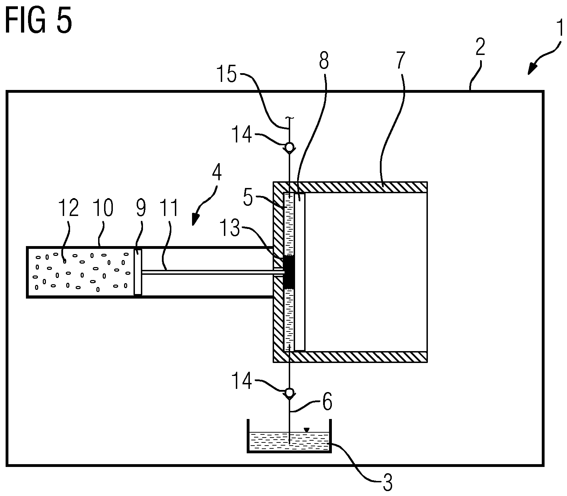

Figur 5 zeigt ein Getriebe 1 gemäß einer dritten Ausführungsform der vorliegenden Erfindung, das im Wesentlichen dem in Figur 3 dargestellten Getriebe 1 entspricht. Unterschiede bestehen darin, dass die Ölleitung 6 mit einem Rückschlagventil 14 versehen ist, das verhindert, dass in der Ansaugkammer 5 befindliches Öl durch die Ölleitung 6 zurück in den Ölsumpf 3 strömen kann. Zum Ablassen des Öls aus der Ansaugkammer 5 ist an die Ansaugkammer 5 eine separate, ebenfalls mit einem Rückschlagventil 14 versehene Ölablassleitung 15 angeschlossen, die zu schmierungsbedürftigen Komponenten (nicht gezeigt) des Getriebes 1 führt. Diese Komponenten werden dann beim Abkühlen des Getriebes 1 automatisch mit Öl aus der Ansaugkammer 5 versorgt.

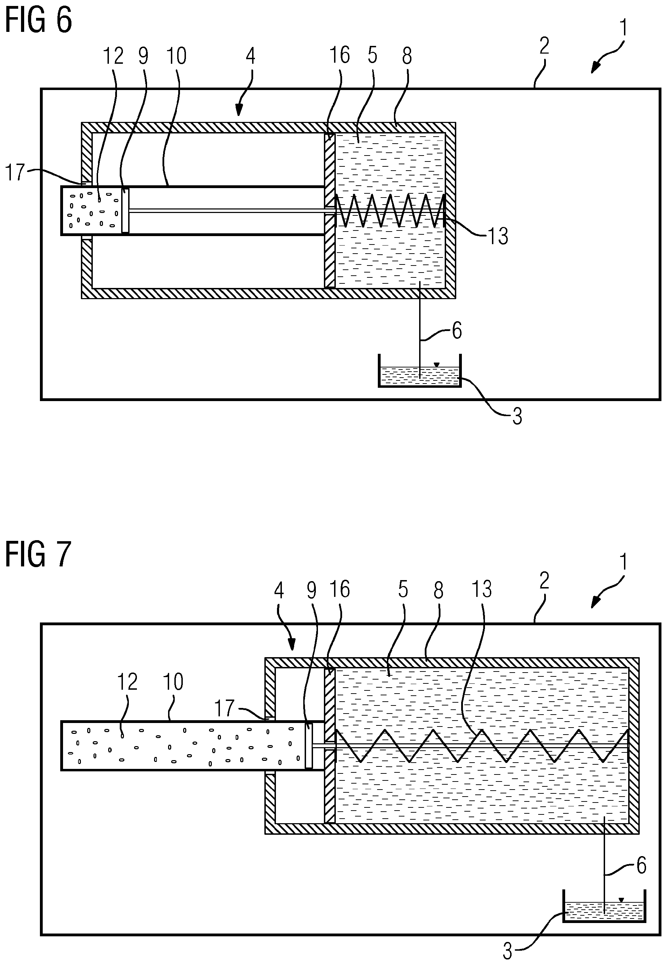

Die Figuren 6 und 7 zeigen ein Getriebe 1 gemäß einer vierten Ausführungsform der vorliegenden Erfindung, das analog zu den zuvor beschriebenen Ausführungsformen ein Getriebegehäuse 2 mit einem Ölsumpf 3 aufweist. Ferner umfasst das Getriebe 1 eine Ölansaug- und Speichervorrichtung 4 mit einer Ansaugkammer 5, die über eine Ölleitung 6 mit dem Ölsumpf 3 verbunden ist. Die Ansaugkammer 5 wird einerseits durch einen als hohlzylindrischer Ringkolben ausgeführten Kolben 8 und andererseits durch eine fluiddicht in dem Kolben 8 aufgenommene, gegenüber dem Kolben 8 fluidtechisch abgedichtete Scheibe 16 definiert, die fest mit dem Arbeitszylinder 10 verbunden und relativ zum Kolben 8 bewegbar ist. Der Arbeitszylinder 10 ist zumindest teilweise in dem Kolben 8 aufgenommen und vorliegend durch eine stirnseitig an dem Kolben 8 vorgesehene Öffnung 17 geführt, so dass auswärts aus dem Kolben 8 vorsteht. Der innerhalb des Arbeitszylinders 10 aufgenommene zweite Kolben 9 ist über eine Kolbenstange 11 mit dem ersten Kolben 8 verbunden und über ein Federelement 13 in Richtung der in Figur 6 dargestellten Stellung vorspannt. Dehnt sich das in dem Arbeitszylinder 10 enthaltene Thermo-Wachs 12 aufgrund einer Temperaturerhöhung innerhalb des Getriebegehäuses 2 des Getriebes 1 aus, so werden die über die Kolbenstange 11 miteinander verbundenen Kolben 8 und 9 aus der in Figur 6 dargestellten Stellung in die in Figur 7 dargestellte Stellung überführt, so dass in der zuvor beschriebenen Weise in dem Ölsumpf 3 enthaltenes Öl über die Ölleitung 6 in die Ansaugkammer 5 gesaugt und der Ölstand im Ölsumpf 3 temperaturabhängig verringert wird. Nimmt die Temperatur innerhalb des Getriebegehäuses 2 wieder ab, so werden die Kolben 8 und 9 aufgrund des schrumpfenden Thermo-Wachses 12 und der Druckkraft des Federelementes 13 wieder zurück in die in Figur 6 dargestellte Stellung überführt und das in der Ansaugkammer 5 enthaltene Öl zurück in den Ölsumpf 3 geleitet.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. So kann beispielsweise auch das in den Figuren 6 und 7 dargestellte Getriebe 1 ohne Federelement 13 ausgeführt werden. Ebenso kann der in den Figuren 6 und 7 dargestellte Aufbau analog zu Figur 5 um Rückschlagventile 14 und eine Ölablassleitung 15 ergänzt werden. Ferner sei darauf hingewiesen, dass die Ölansaug- und Speichervorrichtung 4 nicht zwangsweise innerhalb des Getriebegehäuses 2 angeordnet werden muss, auch wenn dies bevorzugt wird. Ebenso ist es bei mangelndem Bauraum innerhalb des Getriebegehäuses 2 auch möglich, die Ölansaug- und Speichervorrichtung 4 außen am Getriebegehäuse 2 zu positionieren. Bei der Positionierung muss allerdings darauf geachtet werden, dass das Thermo-Wachs 12 von betriebsbedingten Temperaturschwankungen des Getriebes, wenn auch zeitversetzt, in der zuvor beschriebenen Weise beeinflusst wird.

## Patentansprüche

1. Ölförder- und Speichervorrichtung (4) zum Absenken eines Ölstands eines Ölsumpfes (3) eines Getriebes (1) während des Betriebs des Getriebes (1), umfassend eine Ansaugkammer (5), an die eine Ölleitung (6) angeschlossen und deren Volumen über die Vor- und Zurückbewegung eines ersten Kolbens (8) veränderbar ist, und einen mit einem zweiten Kolben (9) versehenen Arbeitszylinder (10), wobei der zweite Kolben (9) mit dem ersten Kolben (8) insbesondere über eine Kolbenstange (11) derart verbunden ist und über ein Thermo-Wachs (12) temperaturabhängig derart bewegt wird, dass das Volumen der Ansaugkammer (5) bei zunehmender Temperatur vergrößert wird.

2. Ölförder- und Speichervorrichtung (4) nach Anspruch 1, **dadurch gekennzeichnet, dass** der erste Kolben (8) über ein Federelement (13) in einer vorbestimmten Richtung vorgespannt ist.

3. Ölförder- und Speichervorrichtung (4) nach einem der vorhergehenden Ansprüche, **dadurch gekennzeichnet, dass** in der Ölleitung (6) ein Rückschlagventil (14) angeordnet ist, und dass an die Ansaugkammer (5) eine separate, mit einem Rückschlagventil (14) versehene Ölablassleitung (15) angeschlossen ist.

4. Getriebe (1) mit einem Getriebegehäuse (2), einem innerhalb des Getriebegehäuses (2) ausgebildeten Ölsumpf (3) und einer Ölansaug- und Speichervorrichtung (4) nach einem der vorhergehenden Ansprüche, wobei die Ölleitung der Ölansaug- und Speichervorrichtung (4) in den Ölsumpf (3) eintaucht und der Arbeitszylinder (10) an einer Position angeordnet ist, in der das Thermo-Wachs (12) durch die während des Betriebs des Getriebes (1) anfallende Verlustleistung erwärmt wird.

5. Getriebe (1) nach Anspruch 4, **dadurch gekennzeichnet, dass** die Ölansaug- und Speichervorrichtung (4) oberhalb des Ölsumpfes (3) angeordnet ist.

6. Getriebe (1) nach Anspruch 4 oder 5, **dadurch gekennzeichnet, dass** die Ölförder- und Speichervorrichtung (4) innerhalb des Getriebegehäuses (2) angeordnet ist.
